# EUROPEAN PATENT APPLICATION

(11) **EP 3 246 883 A1**
(43) Date of publication of application: **22.11.2017**
(21) Application number: 16425043.3
(22) Date of filing: 19.05.2016
(51) Int. Cl.: G07F 7/06, G06Q 20/14, G07F 17/00, G06Q 30/02

(54) **AUTOMATIC COMBINED SYSTEM FOR CHECKING AND TRACING SOLID WASTE THROUGH A MECHANICAL-ELECTRONIC-TECHNOLOGICAL GEOLOCALIZED DEVICE**

(71) Applicant: Eco Cyrcle System S.r.l., 70026 Modugno (BA) (IT)
(72) Inventor: Brancaccio, Rino, 70026 Modugno (BA) (IT)
(74) Representative: Russo, Saverio

(57) **Abstract**

Automatic combined system for checking and tracing solid waste by means of a mechanical, electronic and technological geolocalized device consisting of a modular battery made of six combined systems which are subdivided according to each type delivered material (plastic, glass, paper, wet waste, metal, wood) and of a container for waste oils collection and temporary storage thereof.

By means of the check and traceability system object of the present invention, if any waste material is erroneously delivered an alarm will sound, and the box containing them will go back to the primary (waste delivery phase) position.

## Description

The present invention refers to a system for checking and tracing solid waste through a machinery consisting of a modular battery made of six combined systems which are subdivided according to the type of the delivered material.

The state of the art includes some Patents, some of which are listed here below:
US 2012/029985 filed on 2nd December 2012 in the name of Wilson Chad Scott, titled "System and method for managing recyclable materials". This Patent refers to a system for collecting recyclable materials, made of a box having an entrance device suitable for receiving and weighing the introduced material, and which data are transmitted to a database, which is set up to give award credits to the user on the basis of the weight of the waste material as introduced into the box.
US 2009/276299 filed on 02nd February 2012 in the name of Gonen Ron, titled "Incentive-based waste reduction system and method thereof". This Patent is about a system for reducing the waste quantity incentived through a technological and methodological combined process which includes a collecting and weighing device to which a value is associated according to the introduced material, said value being settled by means of an algorithm.

The Application for a Utility Model no. BA2013A0000044, titled "System for the control and traceability of municipal solid waste (MSW)", filed on 04th December 2015 by the same inventor of the present Patent Application, is a first Application aiming at avoiding the disadvantages of the state of the art, presenting a system for collecting waste materials through a "intelligent" box which is able to recognize, select and weigh said materials and through the transmission of all data from the box to a control unit, so allowing users to get benefits.

The aim of the present Patent Application is to improve the above mentioned Utility Model Application, providing a system for checking and tracing solid waste through a machinery consisting of a modular battery which includes six combined boxes for separately delivering different waste materials and checking them.

This system uses innovative industrial technologies in connection with sensor-based control and a software especially developped to manage and work out the information transmitted by the hardware, for cross-checking purposes.

The system allows to:
- gather information on a local basis with regard to the homogeneous waste production (type of delivered materials, percent quantity of unsuitable materials, identification of users, and so on), so making it possible to coherently supervise the costs of this service (horizontal level);
- create an impartial database with regard to the solid waste production useful for analysis and statistics processing on a municipal, regional or national basis (vertical level);
- create a system of rigorous and rewarding consideration of the environment on a national basis, by means of which it is possible to immediately and certainly relate each inhabitant to the waste material as delivered (its quality and quantity), granting the most "virtuous" users fiscal benefits and effect local fiscal policies which can be modified according to the "virtuous" users' attitudes and/or inclinations in a specific area;
- provide direct and quick paths of environmental education, by involving the unsuitable delivered waste products to be ejected;
- promote the so called "Circular Economy" (which combines the social welfare with the increase in employment, health, environmental protection, *smart city* and *smart green* programmes), with the ultimate aim of achieving a *zero waste* project.

It is a system based on social inclusion and on cultural and rewarding advancement.

The machinery attaining the so far described system is made of a modular battery including six combined boxes, each of them being intended for a specific type of waste material (plastic, glass, paper, wet waste, metal, wood); said boxes are contained inside a mechatronic housing named "ECO SMART BOX", which is:
1) digital
2) interconnected
3) dynamic
4) structured
5) remote-controlled
6) video-monitored
7) geolocalized
8) self-sufficient in energy
and aim at checking the actual weight of the delivered materials but also the possible presence of any elements different from those made known by the user upon throwing them out.

In case of unsuitable materials, an alarm in the system will sound and the box containing them will go back to the primary (waste delivery phase) position.

The machinery is also provided of an inner container for waste oils collection.

The machineries are connected together through a digital computer system and they are placed in an area on "groups of streets which are, in turn, interconnected by means of a digital web".

Furthermore, each machinery is feeded by means of photovoltaic panels, so as to minimise the energy consumptions.

The invention is better described in the attached drawings which illustrate, respectively:
Fig. 1 : the machinery having a modular battery made of six combined boxes;
Fig. 2 : the phases of the waste materials treatment: delivery of waste, checking thereof, weighing, discarding of waste into the box for its subsequent compaction;

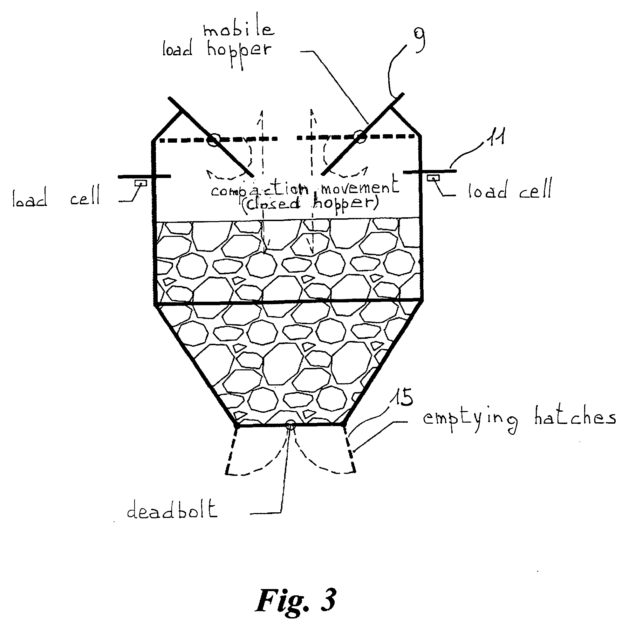

Fig. 3 : a view of the box;
Fig. 4 : side view of the mechatronic geolocalized machinery and of the hopper through which waste is discharged into a collecting vehicle at the centre of the machinery;
Fig. 5 : A detail of the container for waste oils collection.

### Description of the process

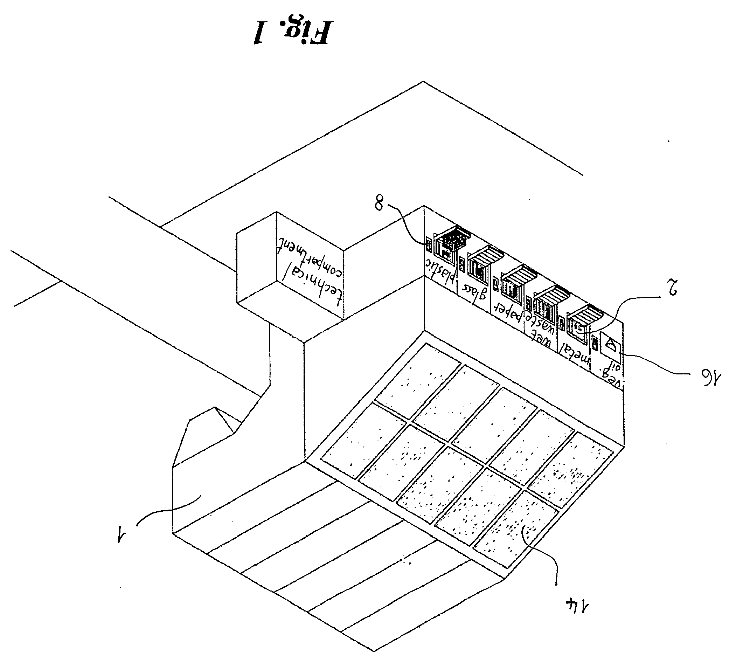

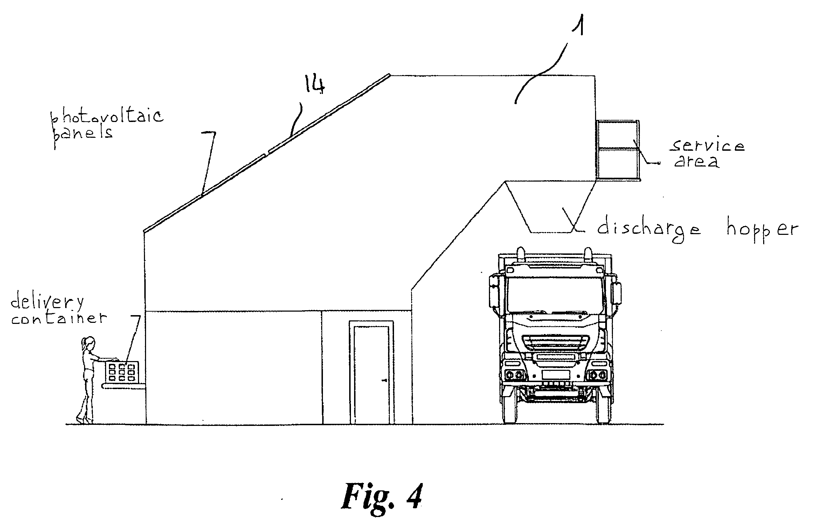

As illustrated in Figs. 1 and 4, waste is delivered into a container 4, specially designed and sized as to be used in the machinery object of this invention, placed on the conveyor belt 3, at the entrance of one of the combined systems 2.

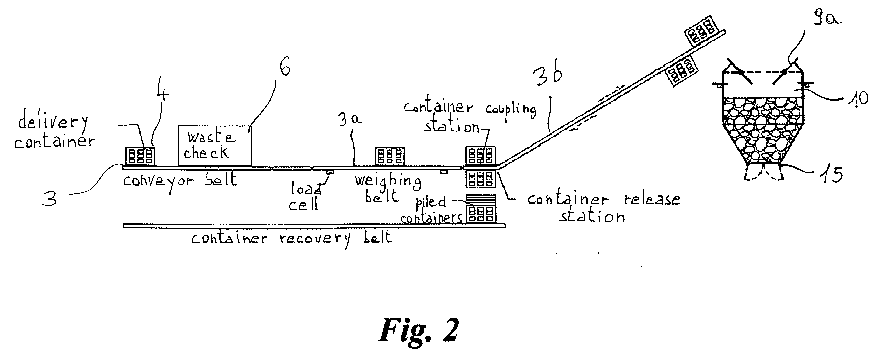

As illustrated in Fig. 2, once the waste is delivered and after disengaging the security systems of the machinery by moving away, the transportation and loading of the container 4 are automatically activated, in this way the waste is carried, by means of the conveyor belt 3 which is inside the machinery, towards the checking phase and data recording phase (type of delivered materials, weight, user's code, check result, quick calculation of the tax reduction, and so on).

Upon entering the machinery, the box 4 moves through a set of combined checking systems (metal detector sensors, survey chambers and dimensional inspection, load cells) and validates, by properly cross-checking data, the correct type of delivered material, assuring no elements different from those made known by the user are delivered.

If inappropriate or extraneous materials are detected, the box 4 goes back to the primary (waste delivery phase) position.

After the first checking phase, the box 4, containing the waste bag, moves upon a second weighing system, provided with load cells 7, for ascertaining the net weight of the delivered material (in other words excluding the tare-weight of the container).

Once the weight is determined, the user is asked to insert a personal card into a suitable magnetic reader 8, as illustrated in Fig. 1, and award credits are recorded on the card on the basis of the quantity and type of the delivered material.

At the end of the scale band, the box 4 containing the waste material is coupled with a second conveyor belt 3b, provided with suitable elements 5, so to be carried to the top of said belt (inclined belt).

On top of the upward belt, the box 4 discharges the bag containing the waste, by letting it fall down, into the load hopper 9 of the "smart box" 10 and, always being coupled to the conveyor belt, goes all the way back towards the primary position, where the box 4 is again available to be used.

Therefore, the waste material falls into the "smart box" 10 and increases the overall weight of the collected waste, determined by the load cells 11 on which said box lies. In this way, a real-time definition and transmission of the quantity of the collected recyclable waste materials is possible.

When a pre-defined weight/volume is obtained, the plates 9a which compose the load hopper, and which are properly hinged, rotate through the action of oleo-dynamic rollers and get in a horizontal position.

In this way, accordingly, the introduction of any other waste material into the box is not allowed, the upward movement of the conveyor belt 3b stops - as well as that of the other belts 3 and 3a of the machinery- so that the plates 9a may move up and down in order to push down the waste contained in the box and compact it. Also in this case, the movement occurs by means of oleo-dynamic rollers or, alternatively, through *rack and pinion* devices.

During the waste compaction phase, the load cells 11 are blocked by means of suitable deadbolts 13, so as not to be damaged.

Once the box is full the machinery stops, until the collecting vehicle gathers the waste and takes it to the temporary waste collection centre.

The collecting vehicle, devised as to include a single type of waste material, settles in the lower part of the box.

An operator of the plant controls the removal of the deadbolt 13 which is in the lower part of the box through the action of an oleo-dynamic roller, upon receiving a positive signal from the whole sensor-based control system of the machinery, so allowing the emptying hatches 15 to open, the latter being actioned through suitable rollers, so that the waste is discharged into the collecting vehicle.

At the end of the discharging operations, when the box is completely empty, the total weight calculation is reset to zero, the hatches 15 are closed, the plates 9a of the hopper are opened, the deadbolts 13 on the load cells are removed and the whole machinery 1 may operate again.

The machinery 1 is structured in such a way that a compacting and collecting vehicle may be placed in the lower part of the discharge hopper.

Furthermore, the machinery 1 is provided with an inner washing system, including a setup for sucking up and suppressing fumes/vapours/odours, having activated carbon filters and water scrubber.

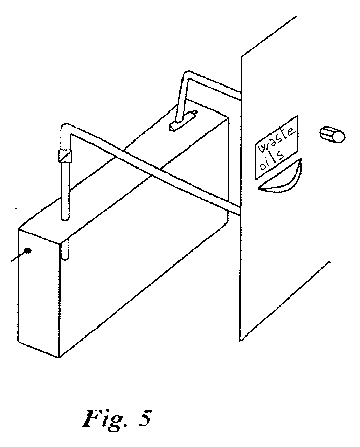

The machinery 1 is also provided, as illustrated in Fig.5, with an inner container for waste oils collection and temporary storage thereof.

Oils are then sent to a local collection tank - equipped with an *overflow* sensor, so as to avoid overfilling it -which is emptied by suitably coupling it to a tanker.

The function of the system object of the present invention is to identify and check the nature of the waste materials introduced into the machinery 1, so assuring a correct waste delivery and recycling.

Delivering different kinds of materials inside the same waste bag is only possible to a limited extent. As above explained, should this happen the conveyor belt 3b rotates in the opposite direction, carrying the bag delivered into the box 4 back to the identification chamber, so allowing the user to take back the "erroneous" material and repeat the delivery operation.

Each modular battery made of boxes interconnected with a digital web is under the control of an "environmental instructor" for the final check of the discharged waste materials.

The techniques for detecting the various materials are based on their chemical/physical features, therefore different methods and sensors simultaneously operate, namely:
- Infrared thermo-camera
   Through an infrared thermo-camera provided with an excitation lamp, it is possible to recognize the nature of the waste materials depending on the radiation they emit. In fact, every type of materials, if properly excited, issues different radiation which is analysed in order to identify it.
- Electronic scent detector
   An electronic scent detector catches odours or gases and analyses them so as to discover the presence of foreign substances in the delivered waste materials (in particular, it detects the erroneous possible presence of wet waste where it is not allowed).
- Mass spectrometer
   The mass spectrometer defines and recognizes the type of waste material on the basis of the response to an electromagnetic field and of the ionisation of the atoms and molecules which compose said material.

## Claims

1. "Combined system for checking and tracing solid waste through a mechanical-electronic-technological geolocalized device", **characterised by** the fact that the waste material, after being introduced into the machinery (1), moves through different combined checking systems (metal detector sensors, survey chambers and dimensional inspection, load cells) so as to assure, by properly cross-checking data, no elements different from those made known by the user are delivered.

2. "Combined system for checking and tracing solid waste", **characterised by** the fact that the process of transportation and load of the box (4) automatically operates in the machinery, so as to activate the phase of checking and data recording ((type of delivered materials, weight, user's code, check result, quick calculation of the tax reduction, and so on).

3. "Combined system for checking and tracing solid waste", **characterised by** the fact that the machinery consists of a modular battery made of six combined systems (2), each of them being intended for delivering and checking a specific type of waste material: plastic, glass, paper, wet waste, metal, wood.

4. "Combined system for checking and tracing solid waste" as claimed in the previous claim, **characterised by** the fact that the box (4) lies on load cells (7) which determine the total weight of the delivered materials, so as to gather and transmit all information about the quantity of the collected waste materials.

5. "Combined system for checking and tracing solid waste" as claimed in the previous claim, **characterised by** the fact that the plates (9a) which compose the load hopper (9), and which are properly hinged, rotate through the action of oleo-dynamic rollers (12) which get in a horizontal position, so not allowing the introduction of any other waste material. The plates (9a), through an up and down movement, push down the waste contained in the box and compact it.

6. "Combined system for checking and tracing solid waste" as claimed in the previous claim, **characterised by** the fact that at the end of the scale band (3a), the box (4) is coupled with a second conveyor belt (3b), provided with suitable elements (5), so to be carried to the top of said belt (3b), where it discharges the bag containing the waste, by letting it fall down, into the load hopper of the "smart box" (10) and, always being coupled to the conveyor belt (3b), goes all the way back towards the primary position.

7. "Combined system for checking and tracing solid waste" as claimed in previous claims, **characterised by** the fact that the recognition and check of the waste materials delivered into the machinery (1) are possible through the use of different methods and sensors, such as an infrared thermo-camera, an electronic scent detector, a mass spectrometer, which allow the identification of the type of waste material as delivered, so assuring a correct waste delivery and recycling.

8. "Combined system for checking and tracing solid waste" as claimed in previous claims, **characterised by** the fact that the machinery is also provided of an inner container (16) for waste oils collection and storage. The collection tank is equipped with an *overflow* sensor (17), which does not allow users to overfill it until it is emptied by suitably coupling it to a tanker.

9. "Combined system for checking and tracing solid waste" as claimed in the previous claim, **characterised by** the fact that once the weight is determined, the user is asked to insert a personal card into a the magnetic reader (8), and award credits are recorded on the card on the basis of the quantity and type of the delivered material.

10. "Combined system for checking and tracing solid waste" as claimed in previous claims, **characterised by** the fact that all the machineries - which are placed in different urban areas and interconnected through computerised means - are feeded by means of photovoltaic panels (14).
